# FASCICULE DE BREVET EUROPEEN

(11) **EP 2 473 362 B1**
(45) Date de publication et mention de la délivrance du brevet: **14.10.2015**
(21) Numéro de dépôt: 10763634.2
(22) Date de dépôt: 31.08.2010
(51) Int. Cl.: B60H 1/00

(54) **PROCÉDÉ D'OPÉRATION D'UN SYSTÈME DE CLIMATISATION D'UN VÉHICULE AUTOMOBILE COMPRENANT UNE BOUCLE SECONDAIRE**
VERFAHREN ZUM BETREIBEN EINER FAHRZEUGKLIMAANLAGE MIT SEKUNDÄRKREIS
METHOD OF OPERATING AN HVAC UNIT OF AN AUTOMOTIVE VEHICLE COMPRISING A SECONDARY CIRCUIT

(30) Priorité: 03.09.2009 FR 0904195
(43) Date de publication de la demande: 11.07.2012
(73) Titulaire: Valeo Systèmes Thermiques, 78321 Le Mesnil Saint Denis (FR)
(72) Inventeur: THUEZ, Jean-Luc, F-781120 Fourqueux (FR); YAHIA, Mohamed, F-75005 Paris (FR)
(74) Mandataire: Vieillevigne, Sébastien Nicolas Bernard
(86) Numéro de dépôt international: PCT/EP2010/062752
(87) Numéro de publication internationale: WO 2011/026847

(56) Documents cités:
- EP-A1- 1 329 344
- EP-A2- 1 264 715
- US-A- 5 904 052

## Description

### Domaine technique de l'invention.

L'invention est du domaine des installations de ventilation, de chauffage et/ou de climatisation d'un véhicule automobile électrique. Elle a pour objet une boucle secondaire destinée à être associée à une boucle de climatisation. Elle a aussi pour objet un système de climatisation comprenant la boucle de climatisation et la boucle secondaire. Elle a enfin pour objet un procédé de mise en oeuvre d'un tel système.

### Etat de la technique.

Un véhicule automobile électrique ou hybride, dont la propulsion est assurée au moins partiellement par un moteur électrique, est couramment équipé d'une installation de ventilation, de chauffage et/ou de climatisation pour modifier les paramètres aérothermiques de l'air contenu à l'intérieur de l'habitacle du véhicule. Une telle modification est obtenue à partir de la délivrance d'au moins un flux d'air à l'intérieur de l'habitacle. L'installation est principalement constituée d'un boîtier qui canalise la circulation du flux d'air préalablement à la délivrance de ce dernier à l'intérieur de l'habitacle.

Pour refroidir le flux d'air préalablement à sa délivrance à l'intérieur de l'habitacle, l'installation coopère avec une boucle de climatisation à l'intérieur de laquelle circule un fluide réfrigérant. La boucle de climatisation comprend un compresseur pour comprimer le fluide réfrigérant, un échangeur de chaleur fluide réfrigérant / fluide caloporteur pour refroidir le fluide réfrigérant à pression relativement constante, au moins un organe de détente pour permettre une détente du fluide réfrigérant, un évaporateur disposé à l'intérieur du boîtier pour refroidir le flux d'air qui traverse ce dernier et, optionnellement un accumulateur de fluide réfrigérant.

Une boucle secondaire, à l'intérieur de laquelle circule le fluide caloporteur, est agencée pour récupérer de la chaleur auprès du moteur électrique qui assure la propulsion du véhicule. La boucle secondaire comprend un radiateur logé à l'intérieur du boîtier pour réchauffer le flux d'air, l'échangeur de chaleur fluide réfrigérant / fluide caloporteur pour récupérer de la chaleur en provenance du fluide réfrigérant, un échangeur fluide caloporteur / air ambiant pour évacuer un éventuel excédent de chaleur et le moteur électrique du véhicule associé à un boîtier électronique de puissance qui assure le contrôle du moteur. Par ailleurs, la boucle de climatisation est pourvue d'au moins une vanne pour configurer la boucle de climatisation soit en mode chauffage et permettre ainsi à la boucle de climatisation de délivrer de la chaleur à la boucle secondaire par l'intermédiaire de l'échangeur de chaleur fluide réfrigérant / fluide caloporteur, soit en mode climatisation pour refroidir le flux d'air par l'intermédiaire de l'évaporateur. On pourra par exemple se reporter au document US 5,641,016 (ISAJI et all) qui décrit un tel système de climatisation comprenant la boucle secondaire et la boucle de climatisation.

Il apparaît que ledit système décrit par US 5,641,016 présente de multiples inconvénients et est finalement peu adapté pour modifier rapidement et de manière satisfaisante la température de l'air contenu à l'intérieur d'un véhicule à propulsion électrique ou hybride.

En premier lieu, le système comprend un nombre important de conduits reliant les différents éléments du système ce qui génère un encombrement préjudiciable et un poids excessif.

De plus, il apparaît qu'un tel système ne permet pas une gestion optimisée des échanges de chaleur que subissent les différents éléments constituant la boucle de climatisation et/ou la boucle secondaire. Plus précisément, la chaleur récupérée auprès du moteur électrique par la boucle secondaire s'avère insuffisante pour réchauffer efficacement le flux d'air. Par ailleurs, la quantité de chaleur récupérable est fonction de la vitesse du véhicule ce qui est insatisfaisant.

Enfin, les échanges de chaleur ne sont pas optimisés dans certaines conditions d'utilisation du véhicule, et notamment lorsque ce dernier subit des arrêts fréquents, par exemple dans des embouteillages et/ou dans certaines conditions de température de l'air ambiant, constitué de l'air extérieur au véhicule donc sujet à de fortes amplitudes thermiques.

EP 1 329 344 A1 divulgue un système de climatisation selon le préambule de la revendication 1.

### Objet de l'invention.

Le but de la présente invention est de proposer un procédé de mise en oeuvre d'un tel système de climatisation en mode chauffage, en mode déshumidification et en mode climatisation avec un coefficient de performance élevé, notamment compris entre 3 et 4.

Une boucle secondaire du système de climatisation est une boucle secondaire à l'intérieur de laquelle circule un fluide caloporteur FC. La boucle secondaire est constituée d'une ligne principale comprise entre une évacuation d'une première vanne trois-voies et une admission d'une deuxième vanne trois-voies, d'une première ligne secondaire comprise entre une première sortie de la deuxième vanne trois-voies et une première entrée de la première vanne trois-voies et d'une deuxième ligne secondaire comprise entre une deuxième sortie de la deuxième vanne trois-voies et une deuxième entrée de la première vanne trois-voies.

La ligne principale comprend avantageusement au moins un échangeur fluide caloporteur / auxiliaire électrique, par exemple dédié à l'échange avec un moteur électrique et/ou un boîtier électronique de puissance et/ou une batterie.

La ligne principale comprend une pompe principale alors que la première ligne secondaire comprend une pompe secondaire. La deuxième ligne secondaire comprend une deuxième pompe secondaire.

La première ligne secondaire comprend un premier échangeur de chaleur fluide réfrigérant / fluide caloporteur, ce qui permet de faire passer des calories du fluide réfrigérant vers le fluide caloporteur, et vice et versa.

Avantageusement, la deuxième ligne secondaire comprend un deuxième échangeur de chaleur fluide caloporteur / air ambiant, de sorte à permettre un échange avec l'air ambiant,

La première ligne secondaire comprend un radiateur qui échange avec un air circulant à l'intérieur d'une installation de ventilation, de chauffage et de climatisation.

Avantageusement, la première ligne secondaire comprend des moyens de chauffage électrique du fluide caloporteur.

Le système de climatisation comprend une boucle secondaire tel que décrite ci-dessus et une boucle de climatisation à l'intérieur de laquelle circule un fluide réfrigérant, la boucle de climatisation comprenant un premier by-pass et un deuxième bypass. Le premier échangeur de chaleur fluide réfrigérant / fluide caloporteur est également constitutif de la boucle de climatisation, un troisième échangeur de chaleur qui échange entre le fluide caloporteur et l'air ambiant étant prévu de sorte à transférer les calories présent dans le fluide réfrigérant vers l'air ambiant à la fois par le deuxième échangeur de chaleur fluide caloporteur / air ambiant et le troisième échangeur.

Selon l'invention, quand le système de climatisation est en mode climatisation, le procédé de son opération consiste, simultanément ou en séquence, à ouvrir le premier by-pass, à fermer le deuxième by-pass, à fermer la première sortie et la première entrée, à ouvrir l'évacuation, l'admission, la deuxième sortie et la deuxième entrée, et à mettre en fonctionnement la pompe principale.

Alternativement, en mode climatisation le procédé consiste, simultanément ou en séquence, à fermer l'évacuation et l'admission, à ouvrir la première sortie, la première entrée, la deuxième sortie et la deuxième entrée, et à mettre en fonctionnement la première pompe secondaire.

En mode chauffage du système de climatisation, le procédé consiste, simultanément ou en séquence, à fermer le premier by-pass, à ouvrir le deuxième by-pass, à ouvrir la première sortie, la première entrée, l'évacuation et l'admission, à fermer la deuxième sortie et la deuxième entrée, et à mettre en fonctionnement la pompe principale ou la première pompe secondaire.

Enfin, en mode déshumidification, le procédé consiste, simultanément ou en séquence, à fermer le premier by-pass et le deuxième by-pass, à ouvrir la première sortie, la première entrée, l'évacuation, l'admission, à fermer la deuxième sortie et la deuxième entrée, et à mettre en fonctionnement la pompe principale ou la première pompe secondaire.

### Description des figures.

La présente invention sera mieux comprise à la lecture de la description qui va en être faite d'exemples de réalisation, en relation avec les figures des planches annexées, dans lesquelles :

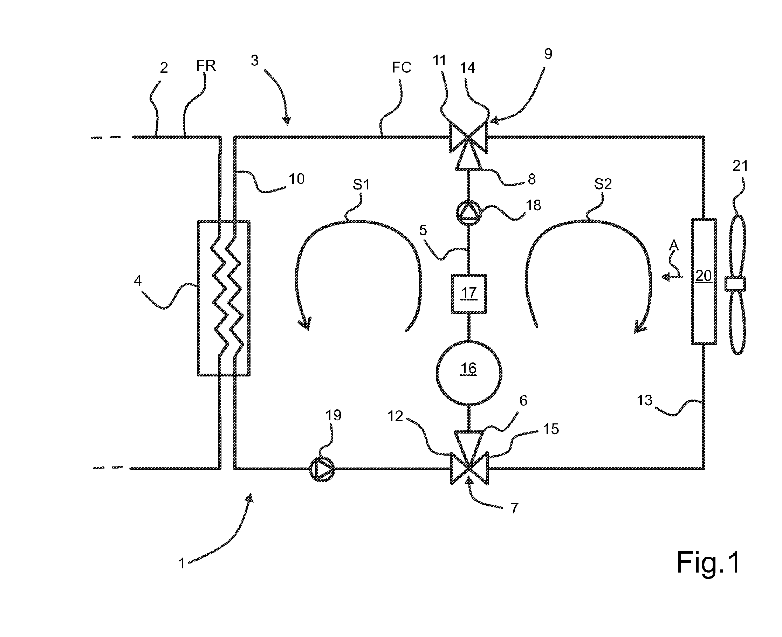

La fig.1 est une illustration schématique d'une boucle secondaire.

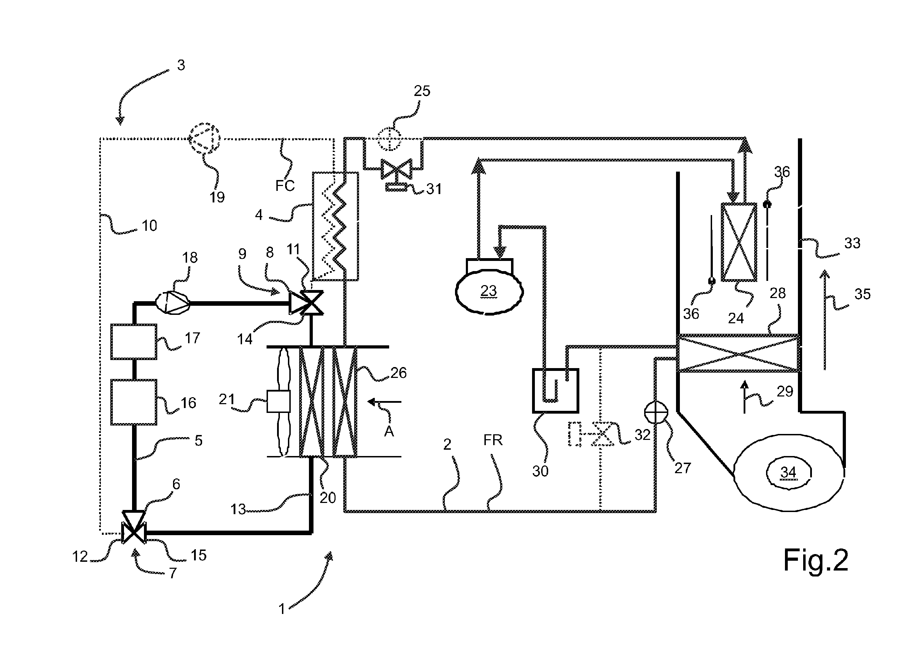

Les fig.2 à fig.8 sont des illustrations schématiques d'un système de climatisation comprenant la boucle secondaire représentée sur la figure précédente, selon différentes variantes de réalisation et selon différents modes de fonctionnement. Ces modes de fonctionnement sont représentés au moyen de traits plein ou de pointillés. Les canalisations représentées en traits illustrent une circulation du fluide concerné par le circuit et les canalisations représentées en pointillés illustrent une absence de circulation du fluide concerné par le circuit.

Sur la fig.1, un véhicule automobile est équipé d'un système de climatisation 1 pour modifier les paramètres aérothermiques de l'air contenu à l'intérieur de l'habitacle du véhicule. Le système de climatisation 1 comprend une boucle de climatisation 2 à l'intérieur de laquelle circule un fluide réfrigérant FR, supercritique notamment, tel que du dioxyde de carbone connu sous l'appellation R744. Le système de climatisation 1 comprend également une boucle secondaire 3 à l'intérieur de laquelle circule un fluide caloporteur FC, tel qu'un mélange d'eau et de glycol. Un premier échangeur de chaleur fluide réfrigérant / fluide caloporteur 4 est constitutif à la fois de la boucle de climatisation 2 et de la boucle secondaire 3, de telle sorte que le fluide réfrigérant FR et le fluide caloporteur FC puissent échanger de la chaleur l'un avec l'autre.

La boucle secondaire 3 est constituée d'une ligne principale 5 comprise entre une évacuation 6 d'une première vanne trois-voies 7 et une admission 8 d'une deuxième vanne trois-voies 9, d'une première ligne secondaire 10 comprise entre une première sortie 11 de la deuxième vanne trois-voies 9 et une première entrée 12 de la première vanne trois-voies 7 et d'une deuxième ligne secondaire 13 comprise entre une deuxième sortie 14 de la deuxième vanne trois-voies 9 et une deuxième entrée 15 de la première vanne trois-voies 7.

Autrement dit, la boucle secondaire 3 présente une architecture très simple, minimisant le nombre de conduits reliant les différents éléments qui la composent. Une telle architecture présente également l'avantage d'être légère et peu encombrante. Une telle architecture présente aussi l'avantage d'être associable à une quelconque boucle de climatisation 2, sans modification de cette dernière. La boucle secondaire 3 comporte un premier circuit de circulation 5,10 du fluide caloporteur FC constitué de la ligne principale 5 et de la première ligne secondaire 10, et un deuxième circuit de circulation 5,13 du fluide caloporteur FC constitué de la ligne principale 5 et de la deuxième ligne secondaire 13. A l'intérieur du premier circuit de circulation 5,10, le fluide caloporteur FC s'écoule selon un premier sens de circulation S1, tandis qu'à l'intérieur du deuxième circuit de circulation 5,13, le fluide caloporteur FC s'écoule selon un deuxième sens de circulation S2.

La ligne principale 5 comprend au moins un échangeur fluide caloporteur FC / auxiliaire électrique. La référence 16 montre plus particulièrement un échangeur fluide caloporteur FC / moteur électrique 16, tel que le moteur apte à permettre le déplacement du véhicule. D'autres auxiliaires électriques sont envisageables tel qu'une batterie ou un boîtier électronique de puissance référencé 17, associé au moteur électrique 16. La ligne principale 5 comprend également une pompe principale 18 pour faire circuler le fluide caloporteur FC depuis l'évacuation 6 de la première vanne trois-voies 7 jusqu'à l'admission 8 de la deuxième vanne trois-voies 9.

La première ligne secondaire 10 comprend le premier échangeur de chaleur fluide réfrigérant / fluide caloporteur 4 et une pompe secondaire 19. Cette dernière permet une circulation du fluide caloporteur FC depuis la première sortie 11 de la deuxième vanne trois-voies 9 jusqu'à la première entrée 12 de la première vanne trois-voies 7 en passant par le premier échangeur de chaleur fluide réfrigérant / fluide caloporteur 4.

La deuxième ligne secondaire 13 comprend un deuxième échangeur de chaleur fluide caloporteur FC / air ambiant 20. Ce dernier est à même de permettre un échange de chaleur entre le fluide caloporteur FC et un air ambiant A, tel que l'air extérieur au véhicule. A cette fin, le deuxième échangeur de chaleur fluide caloporteur / air ambiant 20 est fréquemment disposé à l'avant du véhicule en étant associé à un ventilateur 21 pour faciliter l'échange de chaleur entre le fluide caloporteur FC et l'air ambiant A, et plus précisément pour maximaliser un transfert de chaleur du fluide caloporteur FC à l'air ambiant A. La deuxième ligne secondaire 13 débute au niveau de la deuxième sortie 14 de la deuxième vanne trois-voies 9 et se termine au niveau de la première entrée 15 de la première vanne trois-voies 7 en passant par le deuxième échangeur de chaleur fluide caloporteur FC / air ambiant 20. La circulation du fluide caloporteur FC dans cette deuxième ligne secondaire 13 est assurée par la pompe principale 18 ou par la pompe secondaire 19, en fonction des modes d'utilisation de la boucle secondaire.

Sur les fig.2 à fig.8, la boucle de climatisation 2 comprend un compresseur 23 pour comprimer le fluide réfrigérant FR, un premier organe de détente 25 pour permettre une détente du fluide réfrigérant FR, un premier by-pass ou vanne de contournement 31 placé en parallèle du premier organe de détente 25, le premier échangeur de chaleur fluide réfrigérant / fluide caloporteur 4, un troisième échangeur de chaleur fluide réfrigérant / air ambiant 26 pour permettre un échange thermique entre le fluide réfrigérant FR et l'air ambiant A, un deuxième organe de détente 27 pour permettre une détente du fluide réfrigérant FR, un évaporateur 28 pour refroidir un flux d'air 29 qui traverse l'évaporateur 28, un accumulateur 30 pour recueillir un éventuel reliquat de fluide réfrigérant FR à l'état liquide en sortie de l'évaporateur 28 et un deuxième by-pass ou vanne de contournement 32 placé en parallèle de l'évaporateur 28 et du deuxième organe de détente 27.

Le système de climatisation 1 coopère avec une installation 33 de ventilation, de chauffage et/ou de climatisation équipant un véhicule automobile. L'installation 33 est principalement constituée d'un boîtier en matière plastique logé sous une planche de bord du véhicule. L'installation 33 est destinée à canaliser la circulation du flux d'air 29 préalablement à sa délivrance à l'intérieur de l'habitacle, en vue de modifier les paramètres aérothermiques de l'air contenu dans l'habitacle du véhicule. L'installation 33 loge un pulseur 34 pour faire circuler le flux d'air 29 à l'intérieur de l'installation 33. L'installation 33 loge également l'évaporateur 28 pour refroidir le flux d'air 29 préalablement à sa délivrance à l'intérieur de l'habitacle.

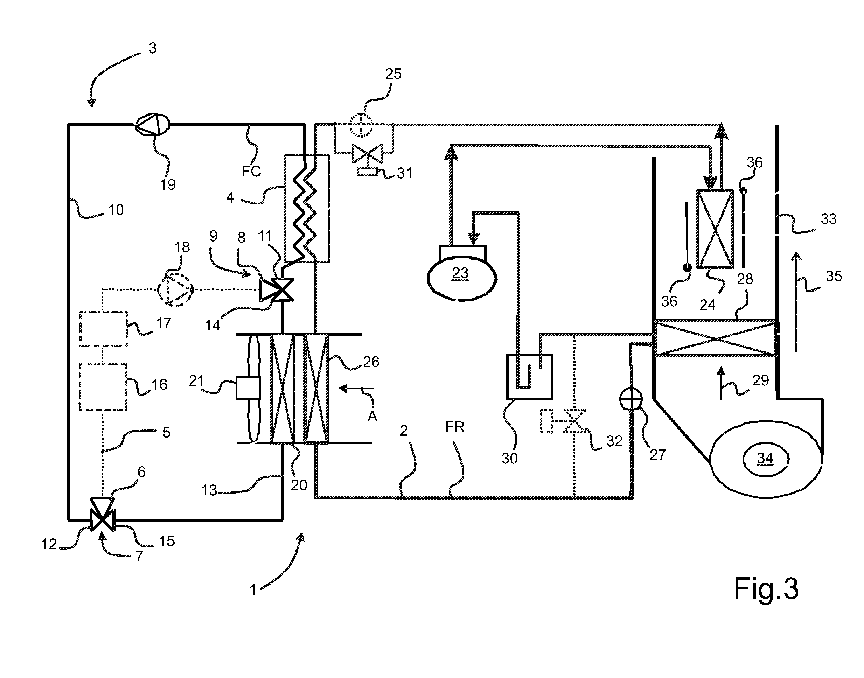

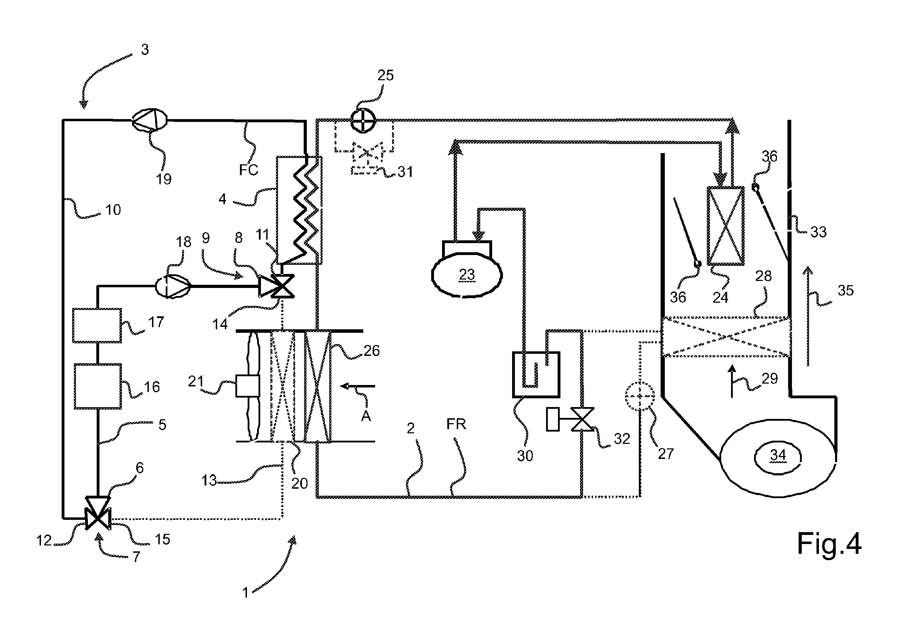

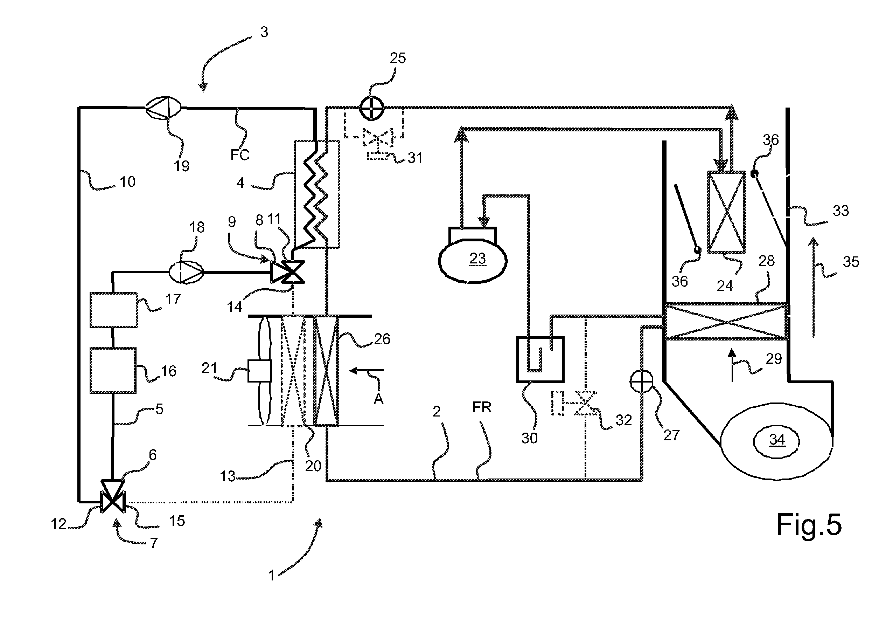

Selon la première variante de réalisation illustrée sur les fig.2 à fig.5, la boucle de climatisation 2 comprend un refroidisseur de gaz 24 qui est destiné à refroidir le fluide réfrigérant FR à pression relativement constante en cédant de la chaleur au flux d'air 29. Ainsi, le refroidisseur de gaz 24 se comporte comme un radiateur pour réchauffer le flux d'air 29 par échange entre le fluide réfrigérant FR en phase gazeuse et à haute température avec le flux d'air 29 qui traverse le refroidisseur de gaz 24. A cet effet, le refroidisseur de gaz 24 est logé à l'intérieur de l'installation 1. Le refroidisseur de gaz 24 est placé en aval de l'évaporateur 28 selon un sens d'écoulement 35 du flux d'air 29 à l'intérieur de l'installation 33. Le refroidisseur de gaz 24 est associé à au moins un volet de mixage d'air 36 qui est manoeuvrable entre une position de fermeture, représentée sur les fig.2 et fig.3, dans laquelle le volet de mixage d'air 36 interdit un passage du flux d'air 29 à travers le refroidisseur de gaz 24, et une position d'ouverture, représentée sur les fig.4 et fig.5, dans laquelle le volet de mixage d'air 36 autorise un tel passage. En alternative, une autre vanne trois voies peut être prévu en sortie du compresseur 23. Cette vanne complémentaire présente une entrée reliée à la sortie du compresseur 23, une première sortie reliée à l'entrée du refroidisseur de gaz 24 et une deuxième sortie reliée à l'entrée du premier organe de détente 25. Cette disposition permet au fluide réfrigérant FR de contourner le refroidisseur de gaz 24 en mode climatisation et limite ainsi les pertes de charge dans la boucle de climatisation puisque le fluide réfrigérant ne traverse pas le refroidisseur de gaz 24 dans ce mode.

Selon cette première variante, le premier organe de détente 25 et le premier by-pass 31 sont interposés sur la boucle de climatisation 2 entre le compresseur 23 et le premier échangeur de chaleur fluide réfrigérant / fluide caloporteur 4.

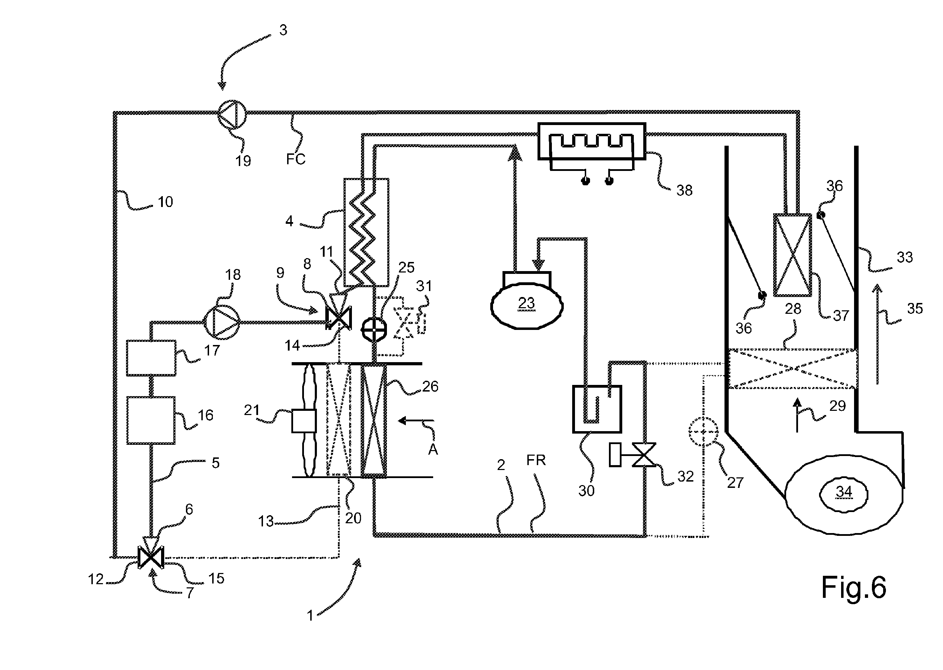

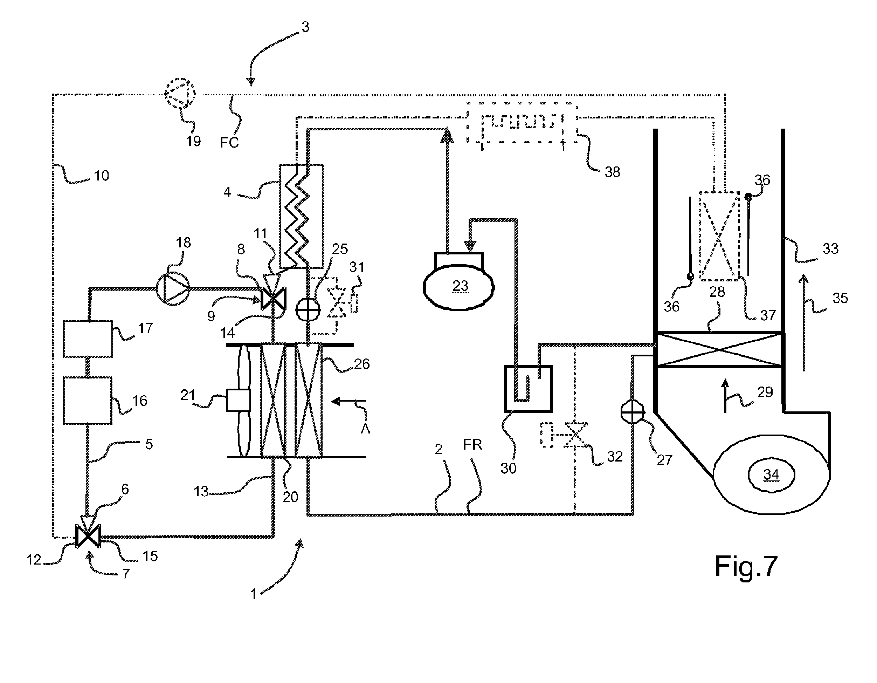

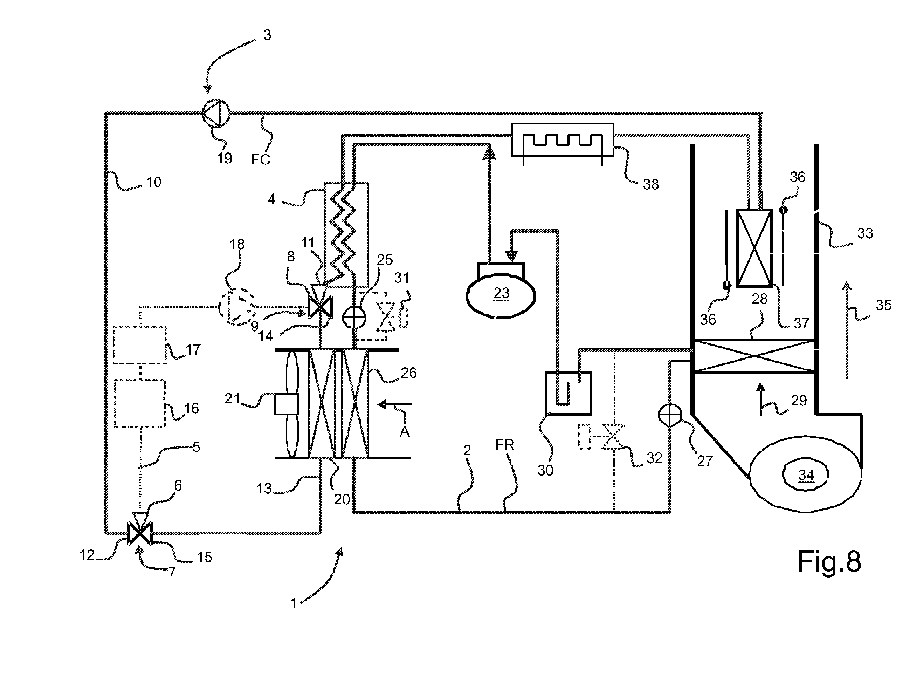

Selon la deuxième variante de réalisation illustrée sur les fig.6 à fig.8, la boucle secondaire 3 comprend un radiateur 37. Plus particulièrement, le radiateur 37 participe de la première ligne secondaire 10 de la boucle secondaire 3, de même qu'un dispositif de chauffage électrique 38 du fluide caloporteur FC, par exemple constitué d'au moins une résistance électrique ou analogue. Le radiateur 37 est logé à l'intérieur de l'installation 33 en aval de l'évaporateur 28 selon le sens d'écoulement 35 du flux d'air 29 à l'intérieur de l'installation 33. A l'instar du refroidisseur de gaz 24 de la première variante, le radiateur 37 est associé à au moins un volet de mixage d'air 36 qui est manoeuvrable entre une position d'ouverture, représentée sur la fig.6, dans laquelle le volet de mixage d'air 36 autorise un passage du flux d'air 29 à travers le radiateur 37, et une position de fermeture, représentée sur les fig.7 et fig.8, dans laquelle le volet de mixage d'air 36 interdit un tel passage. En position d'ouverture du volet de mixage d'air 36, le radiateur 37 permet un réchauffement du flux d'air 29 qui le traverse.

Selon cette deuxième variante, le premier organe de détente 25 et le premier by-pass 31 sont interposés sur la boucle de climatisation 2 entre le premier échangeur de chaleur fluide réfrigérant / fluide caloporteur 4 et le troisième échangeur de chaleur fluide réfrigérant / air ambiant 26.

Sur les fig.2 et fig.3, le système de climatisation 1 fonctionne en mode climatisation. Dans cette configuration, la boucle de climatisation 3 permet un refroidissement du flux d'air 29 par l'intermédiaire de l'évaporateur 28. A cet effet, le premier by-pass 31 est ouvert pour empêcher une détente du fluide réfrigérant FR à l'intérieur du premier organe de détente 25 tandis que le deuxième by-pass 32 est fermé pour obliger le fluide réfrigérant FR à subir une détente à l'intérieur du deuxième organe de détente 27. Le volet de mixage 36 est en position de fermeture pour minimiser les échanges de chaleur à l'intérieur du refroidisseur de gaz 24 entre le fluide réfrigérant FR et le flux d'air 29.

Sur la fig.2, le système de climatisation 1 fonctionne en mode climatisation. Dans cette configuration, le fluide caloporteur FC circule uniquement à l'intérieur du deuxième circuit de circulation constitué de la ligne principale 5 et de la deuxième ligne secondaire13, la première sortie 11 et la première entrée 12 étant fermées tandis que l'évacuation 6, l'admission 8, la deuxième sortie 14 et la deuxième entrée 15 sont ouvertes. Il en découle que la boucle secondaire 3 permet un refroidissement des auxiliaires électrique, et notamment du moteur électrique 16, par l'intermédiaire de l'échangeur fluide caloporteur FC / auxiliaire électrique et du deuxième échangeur de chaleur fluide caloporteur / air ambiant 20. Le fluide caloporteur FC ne circulant pas à l'intérieur de la première ligne secondaire 10, aucun échange de chaleur ne s'effectue entre le fluide caloporteur FC et le fluide réfrigérant FR à travers le premier échangeur de chaleur fluide réfrigérant / fluide caloporteur 4. Cette configuration du système de climatisation 1 est particulièrement avantageuse lorsque le véhicule électrique est en mode roulage, c'est-à-dire lorsque le moteur électrique fonctionne et nécessite d'être refroidi. Dans ce cas-là, la boucle de climatisation 2 et la boucle secondaire 3 fonctionnent indépendamment l'une de l'autre dans le sens où aucun échange de chaleur ne se produit entre le fluide caloporteur FC et le fluide réfrigérant FR.

Sur la fig.3, le fluide caloporteur FC circule uniquement à l'intérieur de la première ligne secondaire 10 et de la deuxième ligne secondaire 13, et ne circule pas dans la ligne principale 5. L'évacuation 6 et l'admission 8 sont fermées tandis que la première sortie 11, la première entrée 12, la deuxième sortie 14 et la deuxième entrée 15 sont ouvertes. Il en découle que le fluide caloporteur FC circule à l'intérieur de la première ligne secondaire 10 pour permettre au fluide réfrigérant FR de céder de la chaleur au fluide caloporteur FC à travers le premier échangeur de chaleur fluide réfrigérant / fluide caloporteur 4. Cette chaleur est véhiculée par le fluide caloporteur FC jusqu'au deuxième échangeur de chaleur fluide caloporteur / air ambiant 20. Ce dernier est alors apte à céder cette chaleur à l'air ambiant A. Cette configuration du système de climatisation 1 ne permet pas un refroidissement du moteur électrique 16 par l'intermédiaire du deuxième échangeur de chaleur fluide caloporteur / air ambiant 20 de telle sorte que cette configuration est particulièrement avantageuse dans le cas où le moteur électrique 16 ne produit pas de chaleur, notamment lorsque le véhicule est à l'arrêt, dans des embouteillages par exemple. Par contre, cette configuration permet un transfert de chaleur du fluide réfrigérant FR vers le fluide caloporteur FC par l'intermédiaire du premier échangeur de chaleur fluide réfrigérant / fluide caloporteur 4 de telle sorte que la charge thermique à transférer par le troisième échangeur de chaleur fluide caloporteur / air ambiant 26 depuis le fluide réfrigérant FR vers l'air ambiant A est minimisé. Ceci est particulièrement avantageux car en utilisant à la fois le troisième échangeur de chaleur fluide caloporteur / air ambiant 26 et le deuxième échangeur de chaleur fluide caloporteur / air ambiant 20, on augmente la surface d'échange avec l'air ambiant pour refroidir le fluide réfrigérant FR (directement pour le troisième échangeur de chaleur fluide caloporteur / air ambiant 26 et via le fluide caloporteur FC pour le deuxième échangeur de chaleur fluide caloporteur / air ambiant 20) dans des conditions critiques, en embouteillages par exemple, pour les échangeurs en face avant du véhicule. Ces dispositions permettent ainsi une optimisation du coefficient de performance de la boucle de climatisation 2, à partir d'un délestage de chaleur depuis le fluide réfrigérant FR vers le fluide caloporteur FC à travers le premier échangeur de chaleur fluide réfrigérant / fluide caloporteur 4, ce délestage étant permis préalablement à un délestage de chaleur pour le fluide réfrigérant FR vers l'air ambiant A à travers le troisième échangeur de chaleur fluide caloporteur / air ambiant 26.

Sur la fig.4, le système de climatisation 1 fonctionne en mode chauffage. Dans cette configuration, la boucle de climatisation 3 permet un réchauffement du flux d'air 29 par l'intermédiaire du refroidisseur de gaz 24. A cet effet, le premier by-pass 31 est fermé pour permettre une détente du fluide réfrigérant FR à l'intérieur du premier organe de détente 25 tandis que le deuxième by-pass 32 est ouvert pour empêcher le fluide réfrigérant FR de subir une détente à l'intérieur du deuxième organe de détente 27. Ainsi, l'évaporateur 28 est inopérant, c'est-à-dire non traversé par le fluide réfrigérant FR. Le volet de mixage 36 est en position d'ouverture pour maximaliser les échanges de chaleur à l'intérieur du refroidisseur de gaz 24 entre le fluide réfrigérant FR et le flux d'air 29.

Le fluide caloporteur FC circule uniquement à l'intérieur du premier circuit de circulation 5,10 ; la première sortie 11, la première entrée 12, l'évacuation 6, l'admission 8 étant ouvertes tandis que la deuxième sortie 14 et la deuxième entrée 15 sont fermées. Il en découle que la boucle secondaire 3 permet un refroidissement des auxiliaires électriques, notamment du moteur électrique 16 par l'intermédiaire de l'échangeur fluide caloporteur FC / auxiliaire électrique et du premier échangeur de chaleur fluide réfrigérant / fluide caloporteur 4. Dans cette configuration, ce dernier permet un transfert de chaleur depuis le fluide caloporteur FC vers le fluide réfrigérant FR, en vue de réchauffer le flux d'air 29 et ainsi créer un point froid nécessaire au fonctionnement thermodynamique de la boucle de climatisation 2. Le fluide caloporteur FC ne circulant pas à l'intérieur de la deuxième ligne secondaire 13, aucun échange de chaleur ne s'effectue entre le fluide caloporteur FC et l'air ambiant A à travers le deuxième échangeur de chaleur fluide caloporteur / air ambiant 20. Cette configuration du système de climatisation 1 est particulièrement avantageuse lorsque le véhicule électrique est en mode roulage, c'est-à-dire lorsque le moteur électrique fonctionne et nécessite d'être refroidi, et plus particulièrement lorsque la température de l'air ambiant A est basse. Dans ce cas-là, le premier échangeur de chaleur fluide réfrigérant / fluide caloporteur 4 fonctionne comme un évaporateur en permettant un refroidissement du fluide caloporteur FC, en vue d'une part de refroidir ultérieurement le moteur électrique 16 et d'autre part en permettant un réchauffement du flux d'air 29 grâce au point chaud créé dans le refroidisseur de gaz 24 et au point froid créé au niveau du premier échangeur de chaleur fluide réfrigérant / fluide caloporteur 4.

Sur la fig.5, le système de climatisation 1 fonctionne en mode déshumidification. Dans cette configuration, la boucle de climatisation 3 permet un refroidissement du flux d'air 29 par l'évaporateur 28, puis un réchauffement du flux d'air 29 par l'intermédiaire du refroidisseur de gaz 24. A cet effet, le premier by-pass 31 est fermé pour permettre une première détente du fluide réfrigérant FR à l'intérieur du premier organe de détente 25 et le deuxième by-pass 32 est également fermé pour permettre une deuxième détente du fluide réfrigérant FR à l'intérieur du deuxième organe de détente 27. Dans ce cas-là, le premier échangeur de chaleur fluide réfrigérant / fluide caloporteur 4 et le troisième échangeur de chaleur fluide caloporteur FC / air ambiant 26 fonctionnent chacun comme un évaporateur, en permettant un refroidissement du fluide caloporteur FC, en vue de refroidir ultérieurement le moteur électrique 16, notamment lorsque le véhicule se déplace à faible vitesse, voire est à l'arrêt dans des embouteillages. Le volet de mixage 36 est en position d'ouverture pour maximaliser les échanges de chaleur à l'intérieur du refroidisseur de gaz 24 entre le fluide réfrigérant FR et le flux d'air 29.

Le fluide caloporteur FC circule uniquement à l'intérieur du premier circuit de circulation 5,10, la première sortie 11 et la première entrée 12, l'évacuation 6, l'admission 8 étant ouvertes tandis que la deuxième sortie 14 et la deuxième entrée 15 sont fermées. Il en découle que la boucle secondaire 3 permet un refroidissement du moteur électrique 16 par l'intermédiaire du premier échangeur de chaleur fluide réfrigérant / fluide caloporteur 4. Dans cette configuration, ce dernier permet un transfert de chaleur depuis le fluide caloporteur FC vers le fluide réfrigérant FR. Le fluide caloporteur FC ne circulant pas à l'intérieur de la deuxième ligne secondaire 13, aucun échange de chaleur ne s'effectue entre le fluide caloporteur FC et le fluide réfrigérant FR à travers le deuxième échangeur de chaleur fluide caloporteur / air ambiant 20.

Sur la fig.6, le système de climatisation 1 fonctionne en mode chauffage. Dans cette configuration, la boucle secondaire 2 permet un réchauffement du flux d'air 29 par l'intermédiaire du radiateur 37 et/ou du dispositif de chauffage électrique 38. Le volet de mixage 36 est en position d'ouverture pour maximaliser les échanges de chaleur à l'intérieur du radiateur 37 entre le fluide caloporteur FC et le flux d'air 29. Ledit dispositif est notamment mis en fonction lorsque l'air ambiant est à une température négative extrême, par exemple inférieure à -10°C. Le fluide caloporteur FC circule uniquement à l'intérieur du premier circuit de circulation 5,10, la première sortie 11 et la première entrée 12, l'évacuation 6, l'admission 8 étant ouvertes tandis que la deuxième sortie 14 et la deuxième entrée 15 sont fermées. Il en découle que la boucle secondaire 3 permet un refroidissement des auxiliaires électriques, notamment du moteur électrique 16 par l'intermédiaire de l'échangeur fluide caloporteur FC / auxiliaire électrique combiné au radiateur 37 qui permet au fluide caloporteur FC de céder de la chaleur du moteur électrique au flux d'air 29 traversant le radiateur 37. Dans cette configuration, le premier échangeur de chaleur fluide réfrigérant / fluide caloporteur 4 permet un transfert de chaleur depuis le fluide caloporteur FC vers le fluide réfrigérant FR, en vue de réchauffer le flux d'air 29. Le fluide caloporteur FC ne circulant pas à l'intérieur de la deuxième ligne secondaire 13, aucun échange de chaleur ne s'effectue entre le fluide caloporteur FC et l'air ambiant A à travers le deuxième échangeur de chaleur fluide caloporteur / air ambiant 20.

Dans cette configuration, le premier by-pass 31 est fermé pour permettre une détente du fluide réfrigérant FR à l'intérieur du premier organe de détente 25 tandis que le deuxième by-pass 32 est ouvert pour empêcher le fluide réfrigérant FR de subir une détente à l'intérieur du deuxième organe de détente 27. Ainsi, l'évaporateur 28 est inopérant et le troisième échangeur de chaleur fluide caloporteur / air ambiant 26 se comporte comme un évaporateur.

Sur les fig.7 et fig.8, le système de climatisation 1 de la figure 6 fonctionne en mode climatisation. Dans ces deux configurations, le premier by-pass 31 est ouvert pour interdire une détente du fluide réfrigérant FR à l'intérieur du premier organe de détente 25 tandis que le deuxième by-pass 32 est fermé pour permettre au fluide réfrigérant FR de subir une détente à l'intérieur du deuxième organe de détente 27. Ainsi, l'évaporateur 28 est à même de refroidir le flux d'air 29 tandis que le troisième échangeur de chaleur fluide caloporteur FC / air ambiant 26 se comporte comme un condenseur.

Sur la fig.7, la boucle secondaire 2 permet un refroidissement des auxiliaires électriques, notamment du moteur électrique 16. Le fluide caloporteur FC circule uniquement à l'intérieur du deuxième circuit de circulation 5,13, la première sortie 11 et la première entrée 12 étant fermées tandis que l'évacuation 6, l'admission 8, la deuxième sortie 14 et la deuxième entrée 15 sont ouvertes. Il en découle que la boucle secondaire 3 permet un refroidissement du moteur électrique 16 par l'intermédiaire du deuxième échangeur de chaleur fluide caloporteur / air ambiant 20 qui permet au fluide caloporteur FC de céder de la chaleur à l'air ambiant A. Le fluide caloporteur FC ne circulant pas à l'intérieur de la première ligne secondaire 10, aucun échange de chaleur ne s'effectue entre le fluide caloporteur FC et le fluide réfrigérant FR par l'intermédiaire du premier échangeur de chaleur fluide réfrigérant FR / fluide caloporteur 4.

Sur la fig.8, la boucle secondaire 2 ne permet pas un refroidissement du moteur électrique 16. Le fluide caloporteur FC circule uniquement à l'intérieur de la première ligne secondaire 10 et de la deuxième ligne secondaire 13, l'évacuation 6 et l'admission 8 étant fermées tandis que la première sortie 11, la première entrée 12, la deuxième sortie 14 et la deuxième entrée 15 sont ouvertes. Un échange de chaleur entre le fluide caloporteur FC et le fluide réfrigérant FR par l'intermédiaire du premier échangeur de chaleur fluide réfrigérant / fluide caloporteur 4 est réalisé. Le deuxième échangeur de chaleur fluide caloporteur / air ambiant 20 se comporte également comme un condenseur. Dans cette configuration, le deuxième échangeur de chaleur fluide caloporteur / air ambiant 20 complète le fonctionnement en condenseur du troisième échangeur de chaleur fluide caloporteur FC / air ambiant 26. Ces dispositions permettent d'obtenir un coefficient de performance élevé. Une telle configuration est particulièrement avantageuse en saison chaude où la température de l'air ambiant A est élevée, par exemple supérieure à 30°C car l'invention permet d'augmenter la surface d'échange disponible avec l'air ambiant A en utilisant deux échangeurs placés sur l'air.

## Revendications

1. Procédé d'opération d'un système de climatisation (1), ledit système de climatisation (1) comprenant une boucle de climatisation (2) à l'intérieur de laquelle circule un fluide réfrigérant (FR) et une boucle secondaire (3) à l'intérieur de laquelle circule un fluide caloporteur (FC), la boucle secondaire (3) étant constituée par :
- une ligne principale (5) qui est comprise entre une évacuation (6) d'une première vanne trois-voies (7) et une admission (8) d'une deuxième vanne trois-voies (9) et qui comprend:
• au moins un échangeur (17) fluide caloporteur (FC) / auxiliaire électrique,
• une pompe principale (18) pour faire circuler le fluide caloporteur (FC) depuis l'évacuation (6) de la première vanne trois-voies (7) jusqu'à l'admission (8) de la deuxième vanne trois-voies (9),
- une première ligne secondaire (10) qui est comprise entre une première sortie (11) de la deuxième vanne trois-voies (9) et une première entrée (12) de la première vanne trois-voies (7) et qui comprend :
• un premier échangeur (4) de chaleur fluide réfrigérant (FR) / fluide caloporteur (FC),
• une pompe secondaire (19) permettant une circulation du fluide caloporteur (FC) depuis la première sortie (11) de la deuxième vanne trois-voies (9) jusqu'à la première entrée (12) de la première vanne trois-voies (7) en passant par le premier échangeur (4),
- une deuxième ligne secondaire (13) qui est comprise entre une deuxième sortie (14) de la deuxième vanne trois-voies (9) et une deuxième entrée (15) de la première vanne trois-voies (7) et qui comprend un deuxième échangeur (20) de chaleur fluide caloporteur (FC) / air ambiant (A) ;
la boucle de climatisation (2) comprenant un premier by-pass (31) et un deuxième by-pass (32),
le premier échangeur (4) de chaleur fluide réfrigérant / fluide caloporteur étant constitutif de la boucle de climatisation (2), un troisième échangeur (26) de chaleur échangeant entre le fluide caloporteur (FC) et l'air ambiant (A),
Jeu de revendications modifiées - requête principale PO
**caractérisé en ce que** la mise en oeuvre en mode climatisation consiste à ouvrir le premier by-pass (31), à fermer le deuxième by-pass (32), à fermer la première sortie (11) et la première entrée (12), à ouvrir l'évacuation (6), l'admission (8), la deuxième sortie (14) et la deuxième entrée (15), et à mettre en fonctionnement la pompe principale (18), ou, alternativement, à fermer l'évacuation (6) et l'admission (8), à ouvrir la première sortie (11), la première entrée (12), la deuxième sortie (14) et la deuxième entrée (15), et à mettre en fonctionnement la pompe secondaire (19).

2. Procédé d'opération d'un système de climatisation (1) selon la revendication 1, dans lequel l'auxiliaire électrique de ladite boucle secondaire (3) est un moteur électrique (16) et/ou un boîtier électronique de puissance (17) et/ou une batterie.

3. Procédé d'opération d'un système de climatisation (1) selon la revendication 1 ou 2, dans lequel la première ligne secondaire (10) de ladite boucle secondaire (3) comprend un radiateur (37).

4. Procédé d'opération d'un système de climatisation (1) selon l'une quelconque des revendications précédentes, dans lequel la première ligne secondaire (10) de ladite boucle secondaire (3) comprend des moyens de chauffage électrique (38) du fluide caloporteur (FC).

5. Procédé selon l'une quelconque des revendications 1 à 4, **caractérisé en ce que** la mise en oeuvre en mode chauffage du système de climatisation (1) consiste à fermer le premier by-pass (31), à ouvrir le deuxième by-pass (32), à ouvrir la première sortie (11), la première entrée (12), l'évacuation (6) et l'admission (8), à fermer la deuxième sortie (14) et la deuxième entrée (15), et à mettre en fonctionnement la pompe principale (18) ou la pompe secondaire (19).

6. Procédé de selon l'une quelconque des revendications 1 à 5, **caractérisé en ce que** la mise en oeuvre en mode déshumidification du système de climatisation (1) consiste à fermer le premier by-pass (31) et le deuxième by-pass (32), à ouvrir la première sortie (11), la première entrée (12), l'évacuation (6), l'admission (8), à fermer la deuxième sortie (14) et la deuxième entrée (15), et à mettre en fonctionnement la pompe principale (18) ou la pompe secondaire (19).

## Patentansprüche

1. Verfahren zum Betreiben einer Klimaanlage (1), wobei die Klimaanlage (1) einen Klimatisierungskreis (2), in dem ein Kühlfluid (FR) zirkuliert, und einen Sekundärkreis (3) umfasst, in dem ein Wärmefluid (FC) zirkuliert, wobei der Sekundärkreis (3) gebildet ist von:
- einer Hauptleitung (5), die zwischen einer Ableitung (6) eines ersten Dreiwegeventils (7) und einer Zuleitung (8) eines zweiten Dreiwegeventils (9) angeordnet ist und umfasst:
• mindestens einen Wärmetauscher (17) Wärmefluid (FC)/ elektrische Hilfseinrichtung,
• eine Hauptpumpe (18), um das Wärmefluid (FC) von der Ableitung (6) des ersten Dreiwegeventils (7) zur Zuleitung (8) des zweiten Dreiwegeventils (9) zirkulieren zu lassen,
- eine erste Sekundärleitung (10), die zwischen einem ersten Ausgang (11) des zweiten Dreiwegeventils (9) und einem ersten Eingang (12) des ersten Dreiwegeventils (7) angeordnet ist und umfasst:
• einen ersten Wärmetauscher (4) Kühlfluid (FR)/Wärmefluid (FC),
• eine Sekundärpumpe (19), die eine Zirkulation des Wärmefluids (FC) vom ersten Ausgang (11) des zweiten Dreiwegeventils (9) zum ersten Eingang (12) des ersten Dreiwegeventils (7) über den ersten Wärmetauscher (4) ermöglicht,
- eine zweite Sekundärleitung (13), die zwischen einem zweiten Ausgang (14) des zweiten Dreiwegeventils (9) und einen zweiten Eingang (15) des ersten Dreiwegeventils (7) angeordnet ist und einen zweiten Wärmetauscher (20) Wärmefluid (FC)/Raumluft (A) umfasst;
wobei der Klimatisierungskreis (2) einen ersten Bypass (31) und einen zweiten Bypass (32) umfasst,
wobei der erste Wärmetauscher (4) Kühlfluid/Wärmefluid den Klimatisierungskreis (2) bildet, wobei ein dritter Wärmetauscher (26) zwischen dem Wärmefluid (FC) und der Raumluft (A) einen Austausch vornimmt,
**dadurch gekennzeichnet, dass** der Einsatz im Klimatisierungsmodus darin besteht, den ersten Bypass (31) zu öffnen, den zweiten Bypass (32) zu schließen, den ersten Ausgang (11) und den ersten Eingang (12) zu schließen, die Ableitung (6), die Zuleitung (8), den zweiten Ausgang (14) und den zweiten Eingang (15) zu öffnen, und die Hauptpumpe (18) in Betrieb zu nehmen, oder alternativ die Ableitung (6) und die Zuleitung (8) zu schließen, den ersten Ausgang (11), den ersten Eingang (12), den zweiten Ausgang (14) und den zweiten Eingang (15) zu öffnen, und die Sekundärpumpe (19) in Betrieb zu nehmen.

2. Verfahren zum Betreiben einer Klimaanlage (1) nach Anspruch 1, bei dem die elektrische Hilfseinrichtung des Sekundärkreises (3) ein Elektromotor (16) und/oder ein elektronischer Leistungskasten (17) und/oder eine Batterie ist.

3. Verfahren zum Betreiben einer Klimaanlage (1) nach Anspruch 1 oder 2, bei dem die erste Sekundärleitung (10) des Sekundärkreises (3) einen Radiator (37) umfasst.

4. Verfahren zum Betreiben einer Klimaanlage (1) nach einem der vorhergehenden Ansprüche, bei dem die erste Sekundärleitung (10) des Sekundärkreises (3) elektrische Heizmittel (38) für das Wärmefluid (FC) umfasst.

5. Verfahren nach einem der Ansprüche 1 bis 4, **dadurch gekennzeichnet, dass** der Einsatz der Klimaanlage (1) im Heizmodus darin besteht, den ersten Bypass (31) zu schließen, den zweiten Bypass (32) zu öffnen, den ersten Ausgang (11), den ersten Eingang (12) die Ableitung (6) und die Zuleitung (8) zu öffnen, den zweiten Ausgang (14) und den zweiten Eingang (15) zu schließen, und die Hauptpumpe (18) oder die Sekundärpumpe (19) in Betrieb zu nehmen.

6. Verfahren nach einem der Ansprüche 1 bis 5, **dadurch gekennzeichnet, dass** der Einsatz der Klimaanlage (1) im Entfeuchtungsmodus darin besteht, den ersten Bypass (31) und den zweiten Bypass (32) zu schließen, den ersten Ausgang (11), den ersten Eingang (12), die Ableitung (6), die Zuleitung (8) zu öffnen, den zweiten Ausgang (14) und den zweiten Eingang (15) zu schließen und die Hauptpumpe (18) oder die Sekundärpumpe (19) in Betrieb zu nehmen.

## Claims

1. Method for operating an air-conditioning system (1), the said air-conditioning system (1) comprising an air-conditioning circuit (2) through which there circulates a refrigerant (FR) and a secondary circuit (3) through which there circulates a coolant (FC), the secondary circuit (3) consisting of:
- a main line (5) comprised between an exhaust (6) of a first three-way valve (7) and an intake (8) of a second three-way valve (9) and which comprises:
• at least one coolant (FC)/electrical auxiliary exchanger (17),
• a main pump (18) for circulating the coolant (FC) from the exhaust (6) of the first three-way valve (7) to the intake (8) of the second three-way valve (9),
- a first secondary line (10) comprised between a first outlet (11) of the second three-way valve (9) and a first inlet (12) of the first three-way valve (7) and which comprises:
• a refrigerant (FR)/coolant (FC) first heat exchanger (4),
• a secondary pump (19) for circulating the coolant (FC) from the first outlet (11) of the second three-way valve (9) to the first inlet (12) of the first three-way valve (7), passing via the first exchanger (4),
- a second secondary line (13) comprised between a second outlet (14) of the second three-way valve (9) and a second inlet (15) of the first three-way valve (7) and which comprises a coolant (FC)/ambient air (A) second heat exchanger (20);
the air-conditioning circuit (2) comprising a first bypass (31) and a second bypass (32),
the refrigerant/coolant first heat exchanger (4) being a constituent part of the air-conditioning circuit (2), a third heat exchanger (26) exchanging heat between the coolant (FC) and the ambient air (A),
**characterized in that** operation in air-conditioning mode involves opening the first bypass (31), closing the second bypass (32), closing the first outlet (11) and the first inlet (12), opening the exhaust (6), the intake (8), the second outlet (14) and the second inlet (15), and switching on the main pump (18) or, alternatively, closing the exhaust (6) and the intake (8), opening the first outlet (11), the first inlet (12), the second outlet (14) and the second inlet (15), and switching on the secondary pump (19).

2. Method of operating an air-conditioning system (1) according to Claim 1, in which the electrical auxiliary of the said secondary circuit (3) is an electric motor (16) and/or a power electronics unit (17) and/or a battery.

3. Method of operating an air-conditioning system (1) according to Claim 1 or 2, in which the first secondary line (10) of the said secondary circuit (3) comprises a heater (37).

4. Method of operating an air-conditioning system (1) according to any one of the preceding claims, in which the first secondary line (10) of the said secondary circuit (3) comprises means (38) for electrically heating the coolant (FC).

5. Method according to any one of Claims 1 to 4, **characterized in that** implementation of the air-conditioning system (1) in heating mode involves closing the first bypass (31), opening the second bypass (32), opening the first outlet (11), the first inlet (12), the exhaust (6) and the intake (8), closing the second outlet (14) and the second inlet (15), and switching on the main pump (18) or the secondary pump (19).

6. Method according to any one of Claims 1 to 5, **characterized in that** implementation of the air-conditioning system (1) in dehumidifying mode involves closing the first bypass (31) and the second bypass (32), opening the first outlet (11), the first inlet (12), the exhaust (6), the intake (8), closing the second outlet (14) and the second inlet (15), and switching on the main pump (18) or the secondary pump (19).
